Europäisches Patentamt

**European Patent Office**

**Office européen des brevets**

(11) Numéro de publication: **0 321 356 B1**

(12) **FASCICULE DE BREVET EUROPEEN**

(45) Date de publication de fascicule du brevet: **16.09.92**  (51) Int. Cl.5: **G06F 15/70, H04N 7/137**

(21) Numéro de dépôt: **88403219.4**

(22) Date de dépôt: **16.12.88**

(54) **Procédé d'estimation multi prédictif du mouvement des points d'une image électronique.**

(30) Priorité: **16.12.87 FR 8717601**

(43) Date de publication de la demande:
**21.06.89 Bulletin 89/25**

(45) Mention de la délivrance du brevet:
**16.09.92 Bulletin 92/38**

(84) Etats contractants désignés:
**DE GB IT NL**

(56) Documents cités:

**LINKS FOR THE FUTURE, SCIENCE, SYSTEMS AND SERVICES FOR COMMUNICATIONS; INTERNATIONAL CONFERENCE ON COMMUNICATIONS, 14-17 mai 1984, pages 703-706, IEEE - Elsevier Science Publishers B.V. (North-Holland), Amsterdam, NL; D.R. WALKER et al.: "New techniques in pel-recursive motion compensation"**

**IEEE TRANSACTIONS ON COMMUNICATIONS, vol. COM-32, no. 8, août 1984, pages 954-968, IEEE, New York, US; S. SABRI: "Movement compensated interframe prediction for NTSC color TV signals"**

(73) Titulaire: **ETAT FRANCAIS représenté par le Ministre des PTT (Centre National d'Etudes des Télécommunications)**
**38-40 rue du Général Leclerc**
**F-92131 Issy-les-Moulineaux(FR)**

Titulaire: **TELEDIFFUSION DE FRANCE S.A.**
**21-27, rue Barbès**
**F-92542 Montrouge Cédex(FR)**

(72) Inventeur: **Pelé, Danièle**
**11, Avenue du Mail**
**F-35000 Rennes(FR)**
Inventeur: **Choquet, Bruno**
**27, Allée J.S. Bach**
**F-35000 Rennes(FR)**

(74) Mandataire: **Corlau, Vincent**
**c/o Cabinet Patrice Vidon Immeuble Germanium 80 avenue des Buttes de Coesmes**
**F-35700 Rennes(FR)**

Rank Xerox (UK) Business Services

## Description

Le domaine de l'invention est celui de l'analyse et du codage de séquences d'images électroniques, et plus particulièrement de l'analyse du mouvement des points de telles images électroniques.

Dans un cas spécifique qui sera détaillé ci-après, le procédé suivant l'invention s'applique à l'analyse de séquences d'images en haute définition destinées à être transmises à travers un canal à débit limité. Une application préférentielle de ce type est la transmission de télévision haute définition sur canal MAC.

Toutefois, le procédé de l'invention peut aussi bien être utilisé dans tout système analysant une séquence d'images (robotique, suivi de cibles, recherche de paramètres spatiaux et/ou temporels,...) ou une séquence d'ensembles de données (applications médicales, météorologiques,...).

Le procédé suivant l'invention est destiné à s'inscrire dans une chaîne de traitement d'images, et à constituer un maillon d'analyse des vitesses de déplacement des points d'images, dans le plan d'images.

Une telle analyse présente de très nombreux intérêts.

Dans le cas de la transmission de séquences d'images dans un canal à débit limité, le traitement d'images a pour objet de réduire le volume d'informations transmises, de telle façon que :
- à l'émission, on procède à une opération de sous-échantillonnage, les données sous-échantillonnées étant accompagnées de "données d'assistance" transmises conjointement dans le canal de données ;
- à la réception, on effectue une opération inverse consistant à utiliser les données d'assistance et le signal sous-échantillonné pour restituer un signal haute définition.

Dans ce schéma, l'étape d'estimation du mouvement des points d'images, selon la présente invention, intervient par exemple préalablement à l'opération de sous-échantillonnage à l'émission. L'estimation de mouvement a alors pour objectif de créer une base de données spatio-temporelles, dont les données sont représentatives de l'activité de mouvement des points, dans le plan de l'image, et dans le temps. Ce sont ces données qui vont permettre de déterminer le traitement le mieux approprié pour effectuer la compression de données par sous-échantillonnage.

Dans le domaine des traitements de compression de données avec prise en compte des mouvements d'images, on connaît déjà le "procédé d'analyse de structures de sous-échantillonnage spatio-temporel d'un signal TVHD en vue de sa transmission dans un canal MAC", tel que décrit dans les actes du colloque TVHD 87, Ottawa 4-8 octobre 1987, tome 1, pages 6.2.1 (P. BERNARD, M.VEILLARD, CCETT). Dans ce procédé d'analyse connu, chaque image de la séquence est divisée en zones, et chaque zone subit systématiquement trois traitements parallèles dans trois filtres linéaires distincts. Chaque filtre assure un filtrage différent de sous-échantillonnage, correspondant respectivement à un filtrage préférentiel pour image fixe, pour image modérément mobile, et pour image très mobile. Les sorties des filtres sont ensuite comparées à la source originale, et un choix du meilleur filtrage est effectué pour déterminer le signal comprimé effectivement transmis.

Une telle batterie de filtres linéaires a pour inconvénients de ne permettre qu'un choix limité entre seulement trois types de filtrage de sous-échantillonnages, sans possibilité d'adapter plus spécifiquement le filtrage à chaque particularité des zones traitées. On a notamment constaté une hétérogénéité de définition de zones distinctes au sein d'une même image, ainsi qu'une faible performance de ce système pour le traitement des mouvements lents. Ce problème se manifeste très clairement par exemple, de façon très gênante pour le spectateur, lors de l'arrêt d'un mouvement lent, ou encore la mise en mouvement d'un objet fixe. Dans ces cas, on passe brutalement, pour le premier cas, d'une définition floue de l'objet mobile à une définition maximale de l'objet fixe, et inversement pour le second cas.

Une approche connue plus affinée du problème de codage d'une séquence d'images consiste alors à réaliser une estimation a priori du mouvement dans la séquence d'images.

A cet égard, T.S. HUANG ("Image sequence analysis : Motion Estimation" in Image Sequence Analysis; Ed. T.S. HUANG, Springer Verlag 1981) identifie trois méthodes distinctes, à savoir la méthode de FOURIER, la méthode "par Correspondances", et la méthode utilisant des gradients spatiaux ou temporels. Les deux premières méthodes présentent un certain nombre d'inconvénients. La méthode de FOURIER s'accompagne d'un problème d'indétermination de phase, et suppose une uniformité du fond d'image. La méthode de "Correspondances" (block matching) semble devoir entraîner des traitements complexes du signal, dont les tentatives de simplification apparaissent entraîner des risques de divergence dans l'algorithme de traitement.

Parmi les méthodes à gradients spatiaux et temporels, on connaît un certain nombre de propositions d'algorithmes : LIM, J.O., et MURPHY, J.A. "Measuring the speed of moving objects from signals" IEEE Trans. on Com., April 75, pp. 474-478) ; NETRAVALI, A.N., ROBBINS, J.D. "Motion compensated television coding : part I" BSTJ, Vol.58, n 3, March 79, pp. 631-670 ; SABRI, S. "Movement compensated interframe prediction for NTSC color TV signals" IEEE Transactions on Communications, Vol. COM 32, n 8, août 1984, pp. 954-968, IEEE, New-York, US ; ROBERT, P. "Définition d'un schéma de codage multimodes avec compensation de mouvement pour les séquences d'images de télévision" Thèse IRISA, nov.83 ; LABIT, C. "Estimation de mouvement dans une séquence d'images de télévision" Thèse IRISA RENNES, Fév. 82 ; WALKER, D.R., RAO, K.R. "New techniques in pel-recursive motion compensation" ICC 84, LINKS FOR THE FUTURE. SCIENCE, SYSTEMS AND SERVICES FOR COMMUNICATIONS, 14-17 mai 1984, IEEE-Elsevier Science Publishers B.V. (North. Holland), Amsterdam, pp. 703-706.

Ces méthodes d'estimation connues connaissent en fait trois types de limites :
- des limites liées à la technique algorithmique retenue,
- des limites liées à la conception récursive de la plupart des algorithmes,
- des limites liées au choix proposé pour l'hypothèse de départ des algorithmes d'estimation.

Pour ce qui est des limites liées aux techniques algorithmiques, on peut essentiellement classer les processus connus en deux groupes : les algorithmes qui recherchent les composantes du vecteur vitesse attaché à un bloc d'images (block matching), et les algorithmes recherchant les composantes du vecteur vitesse attaché à un point d'images. Les critères de choix de l'une ou de l'autre des techniques algorithmiques sont liés essentiellement à la complexité relative des traitements mis en oeuvre, et à la perception psychovisuelle de l'efficacité relative attachée à chaque technique.

Pour le procédé suivant l'invention, on a fait la sélection de travailler préférentiellement avec un estimateur de mouvement par points, et de façon préférentielle mais non limitative avec l'estimateur de mouvements tel que décrit par WALKER et RAO. Les raisons de ce choix, qui fait partie de la démarche inventive ayant abouti au procédé, apparaîtront ci-après.

On notera que le procédé s'applique néanmoins aussi bien à l'estimation de mouvement de blocs, chaque bloc pouvant être représenté par un représentant unique, éventuellement vectoriel.

La seconde limite est liée au caractère récursif de la plupart des algorithmes connus. La récursivité présente l'inconvénient de nécessiter plusieurs boucles de calcul pour réaliser l'estimation de mouvement d'un point. Ces opérations sont donc obligatoirement séquentielles, puisque l'estimation d'ordre n ne peut être évaluée qu'après connaissance de l'estimation d'ordre n - 1. Aux fréquences TV actuelles, cette procédure est incompatible, ou à tout le moins pénalisante.

Enfin, un troisième type de limitation est lié au mode d'initialisation actuellement préconisé pour les algorithmes d'estimation de mouvement connus, et essentiellement pour les algorithmes d'estimation dits "récursifs par points" (en anglais : pel-recursive). Ces modes d'initialisation sont généralement liés, d'ailleurs, à la technique algorithmique et au mode de récursivité retenu. Sous cet angle, on peut distinguer deux techniques principales de récursion, correspondant à un affinage d'estimation de mouvement des points selon soit une interpolation spatiale (voir par exemple A.N. NETRAVALI, JD. ROBBINS, déjà cité ; P.ROBERT, C. CAFFORIO, F. ROCCA "Time/space recursions for differential motion estimation", $2^{nd}$ Internat. Tech. Symp on Optical and Electro Optical Applied Science and Engineering, Cannes, December 1985 ; B.K.P. HORN, B.G. SCHUNCK "Determining optical flow" Artificial Intelligence, vol. 17, pp. 185-203, 1981 ; W. ENKELMANN "Investigations of multigrid algorithms for the estimation of optical flow fields in image sequences " Workshop on motion : rep. and analysis, IEEE mai 1986, Charleston), soit une interpolation temporelle (Y. NINOMIYA, Y. OHTSUKA "A motion compensated interframe coding scheme for television pictures" IEEE Transactions on Communications, vol. COM - 30, n 1, Jan. 82, pp 201-211 ; R. PAQUIN, E. DUBOIS "A spatio - temporal gradient method for estimating the displacement vector field in time - varying imagery", Computer Vision, graphics and image process., vol. 21, 1983, pp 205-221). L'interpolation temporelle est plus particulièrement adaptée au traitement des séquences d'images fixes, alors que l'interpolation spatiale est essentiellement satisfaisante pour les séquences d'images rapides. En revanche, les lois disponibles sont mal adaptées au cas des mouvements lents, pour lesquels ils ont montré un important traînage à direction privilégiée polluant de façon importante et non cohérente le traitement de codage d'images.

Le procédé suivant l'invention a notamment pour objectif de pallier l'ensemble des inconvénients de l'état de la technique.

Plus précisément, un premier objectif de l'invention est de fournir un procédé d'estimation du mouvement de points d'images électroniques, dans le plan de l'image, au moyen d'un traitement rapide, convergent, et adaptatif, notamment dans le but de permettre un traitement ultérieur performant de sous-échantillonnage de la séquence d'images, sans obérer la qualité psychovisuelle de l'image reconstituée à partir de l'image sous-échantillonnée. Cette application est donnée à titre indicatif.

Un second objectif de l'invention est de fournir un tel procédé d'estimation de mouvement, qui soit indépendant du format d'image. Le procédé s'applique ainsi aussi bien au format 4/3, qu'au format 16/9 (TVHD).

Un autre objectif de l'invention est de fournir un tel procédé qui puisse être mis en oeuvre par circuit câblé, en minimisant le nombre et le coût des constituants, et notamment la capacité des mémoires tampons utilisées.

L'invention comporte également plusieurs sous-objectifs complémentaires, liés à la solution spécifique développée plus loin, tel que la résolution de conflits d'interprétation des mouvements de points, ou encore la gestion de bords d'écran.

Un objectif supplémentaire de l'invention est de fournir un tel procédé qui soit compatible, dans au moins une de ces versions, avec les systèmes actuels de traitement, notamment dans l'application de l'invention au codage de la TVHD pour canal MAC.

Un autre objectif de l'invention est de permettre la réalisation d'une estimation de mouvement en utilisant le principe de différents types d'algorithmes, connus ou encore à développer, tels que par exemple l'algorithme WALKER et RAO, ou encore l'algorithme de ROBERT, CAFFORIO et ROCCA, déjà cités.

L'invention a encore pour objectif de fournir un procédé de codage d'images incluant le procédé d'estimation de mouvement présentant les qualités mentionnées ci-dessus, le procédé de codage comportant également des moyens de décision d'utilisation sélective d'un codage approprié entre plusieurs possibilités de codage disponibles. Un tel procédé de codage doit notamment pouvoir optimiser tant le codage d'images fixes que le codage d'images mobiles, à déplacement lent ou rapide, ou encore le codage de zones de rupture spatio-temporelle (contour, brusque variation du mouvement, ...), sans entraîner de retard de traitement.

Ces objectifs, ainsi que d'autres qui apparaîtront par la suite sont atteints à l'aide d'un procédé d'estimation de mouvement pour séquences d'images électroniques, notamment destiné à affecter à chaque point d'image électronique un vecteur de déplacement dans le plan de l'image à l'instant t, dans le but par exemple d'une part, de réaliser un traitement de compression optimisé du signal d'image, et/ou d'autre part de permettre de réaliser une projection approximative de la position de l'image t dans l'image suivante à l'instant $(t + 1)$,

ledit vecteur de déplacement courant d'un point courant à l'instant t étant calculé selon un processus algorithmique de prédiction/correction, ledit processus consistant à prendre comme hypothèse de départ de calcul une valeur prédite de mouvement, ladite valeur prédite étant corrigée ensuite au sein du processus selon un procédé de correction par optimisation de critère,

caractérisé en ce que

ladite valeur prédite de mouvement du point courant est la valeur du vecteur de déplacement d'origine associée à un point d'origine de l'image de l'instant $(t - 1)$, ledit point courant étant la projection approximative dudit point d'origine selon ledit vecteur de déplacement d'origine.

De façon avantageuse, ledit processus de prédiction/correction est du type des algorithmes "récursifs par point", et notamment l'algorithme de WALKER et RAO, ou encore l'algorithme de ROBERT, CAFFORIO et ROCCA.

L'invention à également notamment pour objet un procédé d'estimation de mouvement pour séquences d'images électroniques, notamment destiné à affecter à chaque point d'image électronique un vecteur de déplacement dans le plan de l'image à l'instant t, dans le but par exemple d'une part, de réaliser un traitement de compression optimisée du signal d'image, et/ou d'autre part de permettre de réaliser une projection approximative de la position de chaque point d'image à l'instant $(t + 1)$, ledit vecteur de déplacement courant d'un point courant à l'instant t étant calculé selon un processus algorithmique de prédiction/correction, ledit processus consistant à prendre comme hypothèse de départ de calcul une valeur prédite de mouvement, ladite valeur prédite étant corrigée ensuite au sein du processus selon un procédé de correction par optimisation de critère,

caractérisé en ce que,

ledit procédé réalise en parallèle au moins deux calculs d'estimation de mouvement à partir de deux valeurs prédites de mouvement du point courant, lesdites valeurs prédites étant choisies parmi au moins une prédiction spatio-temporelle dans l'axe du mouvement et au moins une des valeurs suivantes :
- au moins une prédiction spatiale de mouvements ;
- au moins une prédiction temporelle de mouvements ;
et en ce que

ledit procédé choisit l'estimation du vecteur de vitesse selon un procédé de décision par optimisation de critère.

D'autres caractéristiques et avantages de l'invention apparaîtront à la lecture de la description suivante de modes de réalisation détaillés de l'invention, donnés à titre illustratif, et des dessins annexés dans lesquels :
- la figure 1 représente un schéma synoptique localisant le procédé d'estimation de mouvement suivant l'invention dans une chaîne de codage/décodage pour transmission d'un signal TVHD à travers un canal MAC ;
- la figure 2 illustre l'estimation de mouvement avec prédiction spatiale ;
- la figure 3 illustre l'estimation de mouvement avec prédiction temporelle ;
- la figure 4 illustre la prédiction de mouvement dans le sens du mouvement ;
- les figures 5A, 5B illustrent le processus d'allocation d'une prédiction par points avec résolution du conflit "candidats multiples", sans résolution du conflit "absence de candidat" ;
- les figures 6 et 7 illustrent un mode de réalisation du procédé suivant l'invention allouant une prédiction à des points dépourvus de prédiction ;
- les figures 8 et 9 sont des schémas synoptiques illustrant la mise en oeuvre d'un procédé d'estimation de mouvement à multi-prédiction suivant l'invention.

Définitions

Estimation de mouvement : méthode de traitement de signal destinée à déterminer en un point (ou un bloc de points) d'une image originale cadrée, le vecteur de déplacement de ce point d'une image à la suivante, par rapport au "cadre" de la séquence d'images.

Compensation de mouvement : méthode de traitement de signal utilisant le vecteur de déplacement en un point (ou un bloc de points) pour interpoler le signal reçu au décodeur afin d'obtenir une image HD en visualisation TVHD.

Critère de mesure de l'adéquation du vecteur mouvement calculé : DFD ("Displaced Frame Difference") ("Ecart entre les luminances du point source (t - 1) et du point cible (t) associés par le vecteur de vitesse calculée"), selon l'algorithme d'estimation de WALKER et RAO ; la recherche du vecteur mouvement optimal (dx, dy) au point (x, y) de l'image t, consiste à aller chercher dans l'image (t - 1) le point de coordonnée (x - DX, y - Dy) tel que la DFD, définie par :

$$DFD = |I(x, y, t) - I(x - Dx, y - Dy, t - 1)|, \text{ soit minimale,}$$

avec :

x = abscisse du point d'image ;

y = ordonnée du point d'image ;

t = instant correspondant au balayage d'une image ;

t - 1 = instant correspondant au balayage de l'image précédant l'image de l'instant t ;

I(x, y, t) = luminance du point (x, y) de l'image de l'instant t.

Contexte du mode de réalisation présenté

Le mode de réalisation de l'invention présenté ci-après s'inscrit dans la conception et la réalisation d'un schéma de codage et de décodage d'une source d'images TVHD, en vue de sa transmission sur canal MAC.

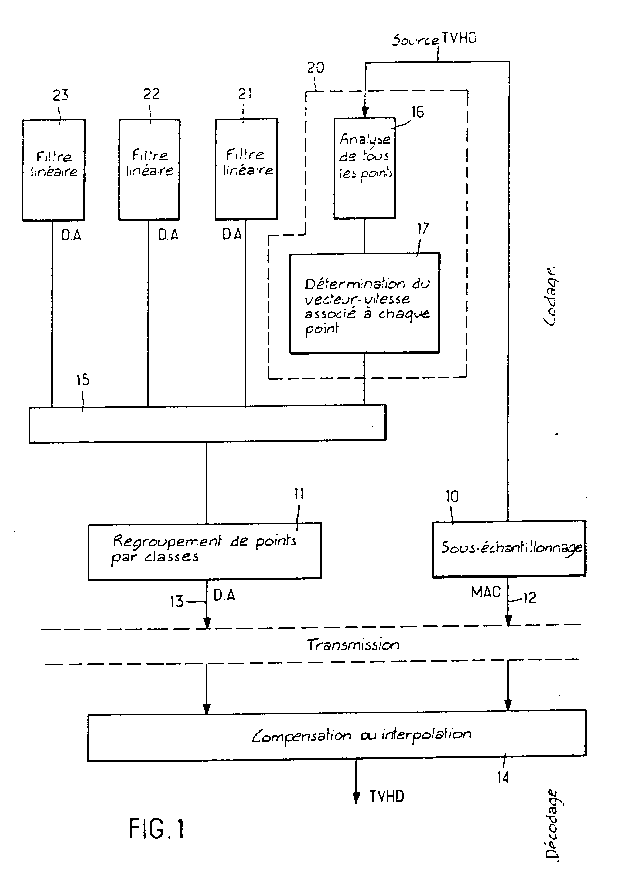

La figure 1 représente un schéma synoptique localisant le procédé d'estimation de mouvement suivant l'invention dans une chaîne de codage/décodage pour transmission d'un signal TVHD à travers un canal MAC. Le mode de réalisation de la figure 1 correspond à une version spécifique compatible avec les systèmes déjà existants, incluant des traitements parallèles par filtres linéaires, et un codage "a posteriori", .

La phase de codage du signal TVHD consiste à :

1) sous-échantillonner l'image source (après filtrage éventuel) pour réduire le nombre d'informations vidéo afin de respecter la norme MAC (étape 10),

2) traiter au codeur la séquence source TVHD pour transmettre des données spatio-temporelles (Données d'Assistance) relatives à ladite fréquence (étape 11).

La phase de décodage 14 consiste à:

1) recevoir le signal MAC transmis, qui correspond à l'image source sous-échantillonnée,

2) en cas de réception sur téléviseur conventionnel, visualiser l'image reçue sans tenir compte des données complémentaires. C'est ce que l'on appelle l'image compatible ;

3) en cas de réception sur téléviseur HD, traiter les données complémentaires pour restituer une image de haute définition TVHD, à travers un système d'interpolation et de compensation approprié 14.

On notera que de façon avantageuse, le signal vidéo sous-échantillonné est transmis dans le canal MAC de luminance 12, alors que les données d'assistance 13 résultant de l'étape 11 transitent par le "canal de données" associé (voir la norme de transmission MAC).

Dans le schéma de la figure 1, on note que l'étape 11 de génération des données d'assistance 13 est alimentée par des moyens de comparaison 15 des résultats de filtrage et d'estimation de mouvement,

EP 0 321 356 B1

réalisés en parallèle dans des circuits 20, 21, 22, 23. Les circuits 20, 21, 22, 23 correspondent à des circuits classiques de filtrage, par filtres linéaires. Les trois voies 21, 22, 23 correspondent respectivement à un filtrage adapté à une zone fixe d'images, à une zone à mobilité lente, et une zone à mobilité rapide.

Le circuit 20 correspond quant à lui à la mise en oeuvre du procédé d'estimation de mouvement suivant l'invention, comprenant une étape 16 d'analyse de tous les points d'images, et une étape 17 de détermination du vecteur vitesse associé à chaque point d'image.

Ce mode de réalisation correspond à une système de codage "a posteriori" en ce sens que le signal source d'image HD subit simultanément, et en parallèle dans chacun des circuits 20, 21, 22, 23, une opération de filtrage/estimation de mouvement, la sélection du traitement de codage optimal étant effectué a posteriori, dans le circuit comparateur 15.

Dans un autre mode de réalisation, plus performant, mais non compatible avec les systèmes existants, le procédé d'estimation de mouvement selon l'invention est effectué en amont des opérations de filtrage, et les résultats obtenus en sortie du circuit 20 conditionnent l'utilisation éventuelle de l'un des filtres 21, 22, 23, lorsque la valeur de mouvement estimée le préconise. En fait, dans un tel mode de réalisation, que l'on peut nommer "codage a priori", seuls les filtres 21 et 23 pour zones fixes, et à mobilité rapide respectivement, sont maintenus. L'opération de filtrage de l'un ou l'autre de ces filtres 21, 23 peut alors être retenue, comme étant optimale, dans le cas d'une estimation d'absence de mouvement, ou d'une estimation de mouvement rapide.

Estimation de mouvement

L'estimation de mouvement a pour objet d'associer à chaque point d'une image t courante, le vecteur déplacement de ce point entre les images t - 1 et t.

La connaissance de ce vecteur déplacement permettrait ainsi, dans le cas d'un mouvement continu (par rapport à la vitesse de balayage), de n'envoyer qu'une image sur deux à travers le canal MAC, chaque image non transmise pouvant être déduite de l'image immédiatement précédente par déplacement des points d'image précédente suivant leur vecteur-déplacement associé. Les "trous" éventuels, dans l'image reconstituée, peuvent ensuite être comblés par interpolation.

On suppose ici que les images haute définition sources sont parfaitement connues, et désentrelacées.

Les vecteurs mouvements sont transmis dans le canal de données prévu par la norme MAC, de façon nettement plus économique que la transmission des points de l'image omise.

De nombreux algorithmes d'estimation de mouvement ont été développés, et ont notamment été cités en préambule. Dans tous les cas, leur rôle est d'associer à chaque point de l'image t, un vecteur qui permet de connaître la position qu'avait ce point dans l'image t-1.

La méthode d'estimation de mouvement retenue pour le présent mode de réalisation est la méthode dite "pel-récursive" de WALKER et RAO, déjà mentionnée. Pour estimer un déplacement, cette méthode utilise une prédiction (donc une valeur initiale probable) du déplacement, et une fonction de correction. Cette dernière dépend d'un gradient spatial local (grad), d'un gain variable calculé à partir du gradient, et d'un écart de luminance noté DFD.

La DFD mesure l'écart de luminance entre le point courant et son correspondant à l'image précédente repéré par le vecteur mouvement.

Cette valeur DFD est une notion fondamentale du procédé selon l'invention, dans la mesure où elle sert non seulement dans l'application de l'algorithme de WALKER et RAO à l'estimation dans le sens de mouvement de l'invention, mais encore dans les opérations de comparaisons des résultats de filtrage et d'estimation de mouvement, comparaisons qui permettent de déterminer la meilleure méthode de codage/échantillonnage du signal transmis.

La méthode de WALKER et RAO est connue comme une méthode itérative, avec prédiction unique.

Les prédictions employées de façon connue jusqu'à présent sont de deux ordres :

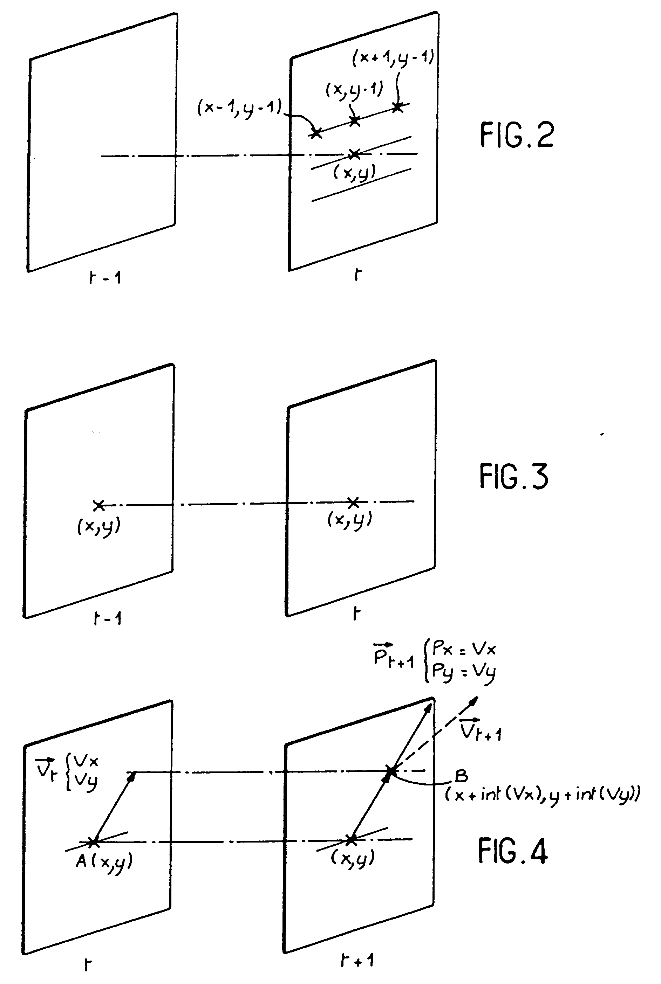

- prédiction spatiale : (fig. 2). le mouvement du point (x, y) est prédit comme devant être proche du mouvement de l'un des points spatialement adjacents, dans l'image t, soit par exemple le point précédent appartenant à la même ligne (x - 1, y, t), soit encore l'un des points proches appartenant à la ligne précédente (x, y - 1, t), (x - 1, y - 1, t), (x + 1, y - 1, t).

Cette prédiction est satisfaisante pour l'estimation de mouvement d'objets étendus spatialement en déplacement rapide dans l'image.

- prédiction temporelle : (fig. 3). la prédiction retenue pour le vecteur déplacement du point (x, y, t) est l'estimation qui avait été calculée pour le point (x, y, t - 1) dans l'image précédente (t - 1).

Ce type de prédiction est clairement optimal dans le cas d'une séquence d'images fixes, et plus précisément de zones d'images fixes.

6

Ces méthodes connues d'estimation sont utiles mais tout à fait insuffisantes comme expliqué en préambule, et ont conduit à développer les trois aspects suivants du procédé suivant l'invention :
- utilisation d'une prédiction du vecteur déplacement dans l'axe du mouvement ;
- fonctionnement du procédé en "multi-prédiction" ;
- intégration du procédé de prédiction dans l'axe de mouvement, et/ou de multi-prédiction, dans une chaîne de codage incluant des filtres linéaires d'échantillonnage, avec fonctionnement soit en mode "a priori", soit en mode "a posteriori". Cette alternative a déjà été présentée plus haut.

Description de la prédiction dans le sens du mouvement :

La prédiction dans le sens du mouvement consiste à projeter, point par point, le champ des vecteurs-mouvements de l'image t dans l'image t + 1. Cette projection se fera suivant les parties entières des composantes Vx et Vy afin d'aboutir sur un point échantillonné de l'image t + 1 (figure 4). Ainsi, dans le cas du point A (x, y, t) de vecteur déplacement estimé $V_t(vx, vy)$, sa projection dans l'image (t + 1) est le point B. Ce point B aura pour prédiction le vecteur de composantes

$$\overrightarrow{P_{t+1}}:$$

Px = Vx, et
Py = Vy
et sa position spatiale dans l'image t + 1 sera :
x + int(Vx)
y + int(Vy)
si x et y sont les coordonnées du point (x, y, t) de vecteur-vitesse (Vx, Vy). L'intervalle de temps entre deux images successives est compté égal à 1. La fonction "int" désigne le plus proche entier du contenu de la parenthèse.
Le vecteur

$$\overrightarrow{P_{t+1}}$$

est ensuite utilisé dans au moins une itération de la méthode d'estimation de WALKER et RAO, afin d'obtenir, après correction, un vecteur estimé

$$\overrightarrow{V_{t+1}}$$

au point B(t + 1).
Avant de commencer la projection des vecteurs-vitesse, une phase d'initialisation consiste, en tout point (x, y, t + 1) de l'image destination, à remplir les tableaux suivants:
Px(x, y, t + 1) = 0 (composante horizontale de la prédiction)
Py(x, y, t + 1) = 0 (composante verticale de la prédiction)
DTD(x, y, t + 1) = 31 (valeur absolue de DFD, limitée à 31)
AXY (x, y, t + 1) = 0 (témoin de la validation de la prédiction au point courant).
La limitation de la valeur de DFD correspond à la contrainte d'obtenir une différence de luminance limitée, entre le point source précédent et le point cible courant. Le chiffre 31 n'est pas une caractéristique limitative de l'invention, mais correspond à une valeur expérimentale correcte, selon les premiers essais, sachant que la luminance peut prendre 255 valeurs distinctes.
Une seconde limitation consiste à limiter l'intensité des vecteurs déplacement prédits et estimés, à une valeur maximale. Ceci revient à éliminer du processus de prédiction/correction d'estimation du vecteur mouvement des points d'images, les points animés d'une mobilité rapide. Dans un mode de réalisation préférentiel de l'invention, les coordonnées (vx, vy) des vecteurs mouvement sont limités à +/- 15.
Si, par application de l'une des deux limitations ci-dessus, le calcul de l'estimation du vecteur mouvement pour un point d'image devait être interrompu, le témoin AXY de validation de la prédiction point courant serait maintenu à zéro. Les données d'assistance relatives à ce point ne pourront donc être déterminées par une estimation dans le sens du mouvement, mais éventuellement par estimation temporelle, spatiale, ou encore par filtrage linéaire, ou interpolation.

7

On notera toutefois qu'un même point de l'image t + 1 peut être un point source de plusieurs points cibles de l'image précédente. Dans ce cas, ce point ne sera réellement dépourvu de prédiction, selon la méthode d'estimation dans l'axe du mouvement, que si aucun des points source n'est susceptible de fournir une prédiction valide pour ce point.

L'algorithme de simulation du procédé de l'invention a pour données d'entrée, le point (x, y, t) de l'image t, de vitesse estimée (Vx, Vy), d'intensité I(x, y, t), aussi notée Io

Le résultat est d'attribuer au point (x + int(Vx), y + int(Vy), t + 1) de l'image t +1 une vitesse prédite, de composantes :

Px(x + int(Vx), y + int(Vy), t + 1) = Vx
Py(x + int(Vx), y + int(Vy, t + 1) = Vy.

Ce point d'impact a pour intensité I(x + int(Vx) y + int(Vy), t + 1), aussi notée I1.

Une différence déplacée absolue est alors déterminée comme étant la fonction |Io - I1|.

L'algorithme comporte trois possibilités, appelées validation, rejet, moyenne.

La validation est la situation suivante :

si :

|Io - I1|<DTD(x + int(Vx), y + int(Vy), t + 1)

alors :

Px(x + int(Vx), y + int(Vy), t + 1) = Vx(x,y,t)
Py(x + int(Vx), y + int(Vy), t + 1) = Vy(x, y, t)
DTD(x + int(Vx), y + int(Vy), t + 1) = |Io - I1|
AXY(x + int(Vx), y + int(Vy), t + 1) = 1

L'instruction : DTD = |Io - I1| signifie que la valeur |Io - I1|, inférieure au contenu initial de DTD, remplace ce contenu.

Le témoin AXY prend la valeur 1 quand une prédiction est validée.

Le rejet est la situation suivante :

si :

|Io - I1|>DTD(x + int(Vx), y + int(Vy), t + 1)

alors aucun tableau n'est modifié. Ce cas concerne donc les projections de vecteur-vitesse qui donnent une prédiction très mauvaise car la différence déplacée absolue |Io - I1| est grande (supérieure à 31, dans l'exemple pris ici). Ce cas concerne aussi un second vecteur candidat, rejeté car la différence déplacée absolue déduite de ce candidat est supérieure à celle d'un premier candidat validé (cette procédure visant le conflit des candidats multiples en un point de l'image t + 1 ; voir plus loin).

La moyenne est la situation suivante :

si

|Io - I1| = DTD(x + int(Vx), y + int(Vy), t + 1)

alors on moyenne le vecteur (Vx, Vy) avec le contenu actuel de la prédiction (Px(x + int(Vx), y + int-(Vy), t + 1 ; Py (x + int(VX), y + int(Vy, t + 1). Le résultat est à nouveau mémorisé au point (x + int(Vx), y + int(Vy), t + 1). Le témoin AXY(x + int(Vx), y + int(Vy), t + 1) est mis à 1. L'intérêt de la moyenne est de pondérer identiquement les candidats potentiels, sauf si trois candidats (ou plus) se présentent (cas statistiquement trop rare pour être traité).

Une utilisation simplifiée du procédé consiste à stopper ici son déroulement. En ce cas, le tableau AXY peut être supprimé.

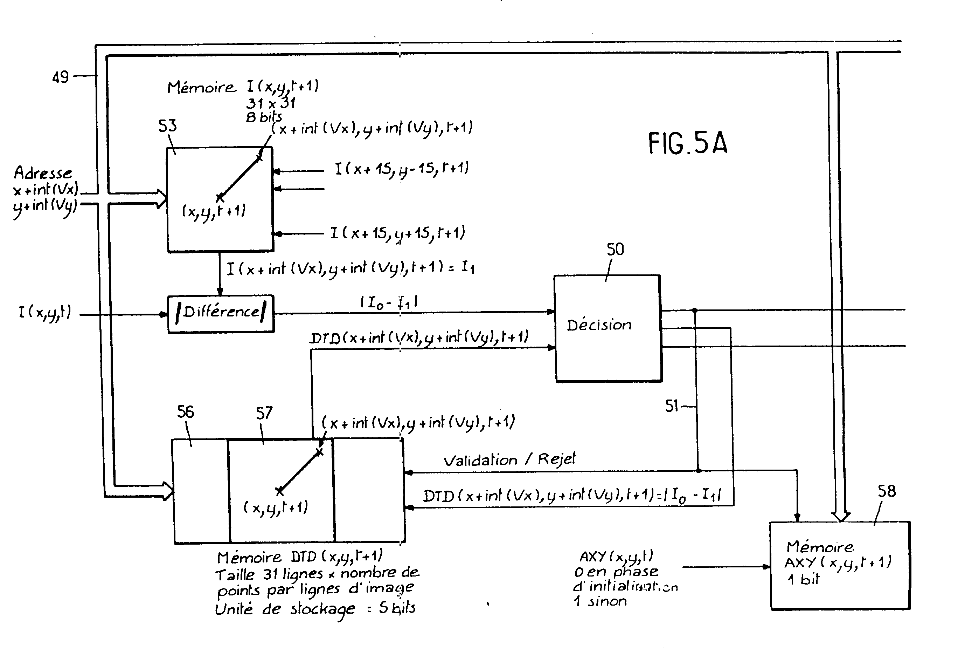

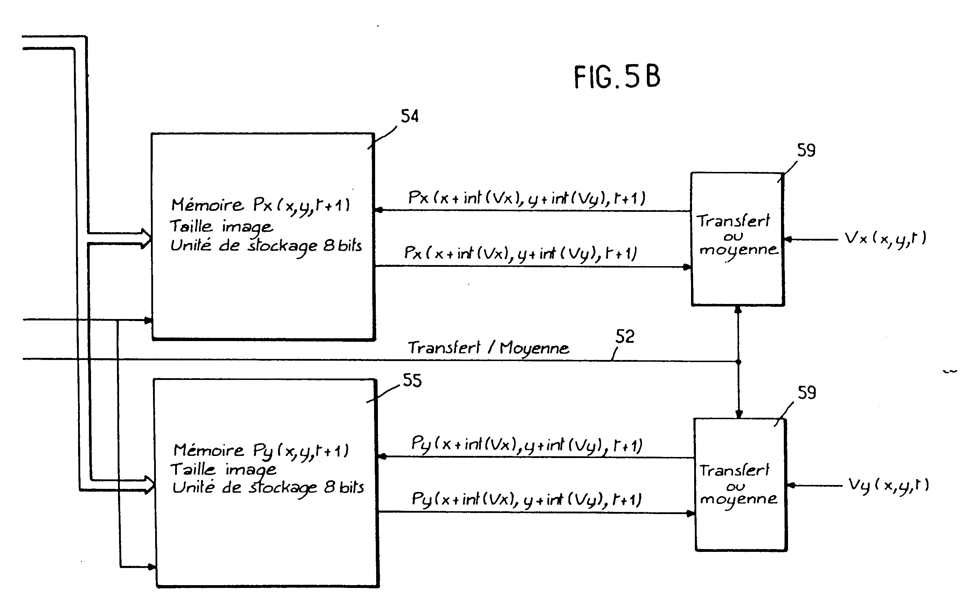

Un schéma synoptique de circuits mettant en oeuvre le procédé de l'invention est représenté en figure 5A, 5B.

L'adresse de point courant circule sur le bus d'adresse 49.

Les unités de stockage des mémoires 53, 54, 55, 56, 58 tiennent compte des dynamiques et des précisions suivantes :

Vx, Vy, Px, Py : +/- 15, précision 1/8, donc 8 bits;

DTD ≤ 31 : valeur entière positive, donc 5 bits;

I : intensité codée sur 8 bits.

Par rapport au point (x, y, t) de vitesse (Vx, Vy), tout se passe dans l'image t + 1 au point (x + int(Vx), y + int(Vy), t + 1). Par conséquent, l'adresse de stockage des données validées est définie par x + int(Vx) et y + int(Vy).

Un bloc 50 baptisé "Décision" traite les valeurs |Io - I1| et DTD(x + int(Vx), y + int(Vy), t + 1) conformément aux trois situations précédemment décrites : validation, rejet, moyenne. Une information "validation/rejet" 51 permet de mémoriser ou non, à l'adresse indiquée, une DTD réactualisée et les composantes Px, Py.

Une information "transfert/moyenne" 52 écrase le contenu précédent Px(x + int(Vx), y + int(Vy), t + 1) par le candidat Vx, et de même entre Py et Vy, on effectue la demi-somme entre le contenu précédent Px et le candidat Vx, et de même entre Py et Vy. Ces nouvelles valeurs sont mémorisées à l'adresse (x + int-(Vx), y + int(Vy), t + 1) (circuits 59).

Les tailles des mémoires tiennent compte des dimensions utiles suivantes :

mémoire I 53 (x, y, t + 1) - → 31 x 31 car la dynamique vaut +/- 15

mémoires Px 54 (x, y, t + 1) - → une image

mémoires Py 55 (x, y, t + 1) - → une image

mémoire DTD 56 (x, y, t + 1) - → 31 x N

mémoire AXY 58 - → 1 bit

N est le nombre de points par ligne d'image. A un instant donné, seule une fenêtre 57 de taille 31 x 31 centrée sur le point (x, y, t + 1) est accessible. Les valeurs de DTD doivent cependant être conservées sur une longueur N pour être éventuellement réutilisées à partir d'un autre point de l'image t + 1. En particulier, les DTD d'une ligne quelconque L sont éventuellement (en fonction de Vx et Vy) adressées jusqu'à ce que la ligne L + 31 ait été traitée.

Gestion de conflit en prédiction dans l'axe du mouvement

Trois cas de figure constituent des cas limites d'application du procédé d'estimation du mouvement dans l'axe du mouvement, pour lesquels il est nécessaire de prévoir une procédure particulière de résolution :

- existence de "candidats multiples A à la projection" en un point B(t + 1), c'est-à-dire existence de plusieurs points source A d'images dont le vecteur mouvement estimé aboutit au point B de l'image t + 1 ;
- existence de points B d'images n'ayant aucun antécédant dans l'image précédente;
- gestion des bords d'images.

Le premier type de conflits (candidats multiples) est résolu en retenant pour prédiction le vecteur qui donne une DFD minimale. Dans un mode de réalisation préférentiel de l'invention, déjà mentionné lors de la description de la figure 5, et en cas d'égalité entre deux ou plusieurs DFD, on effectue la moyenne entre les candidats correspondants.

Le second cas de conflit envisagé est celui de l'absence de point source candidat A pour un point courant B de l'image courante.

Le procédé accepte notamment la mise en oeuvre de deux solutions à un tel conflit.

La première solution consiste à réaliser l'affectation d'un vecteur prédit au point B, par analyse spatiale de l'environnement du point B dans l'image t + 1, et association des points d'un même objet. Cette solution est efficace pour trouver le vrai champ de vecteurs-vitesse, mais difficilement utilisable en compensation (à la réception), puisque l'interpolation qui est réalisée à la réception est un filtrage dans le sens du mouvement. Il en résulte des problèmes dans le cas de recouvrement/découvrement dans le plan d'image, entre deux objets mobiles, ou encore entre un objet et le fond d'image.

La seconde solution, qui est mise en oeuvre de façon préférentielle, consiste à rechercher autour du point B dépourvu de candidat, les points voisins ayant un vecteur prédit dans l'image t + 1. On affecte parmi ces vecteurs, celui qui donne une DFD minimale pour le point courant B. En cas d'égalité entre deux ou plusieurs DFD, on retient le vecteur de module minimal, pour éviter tous risques de divergence.

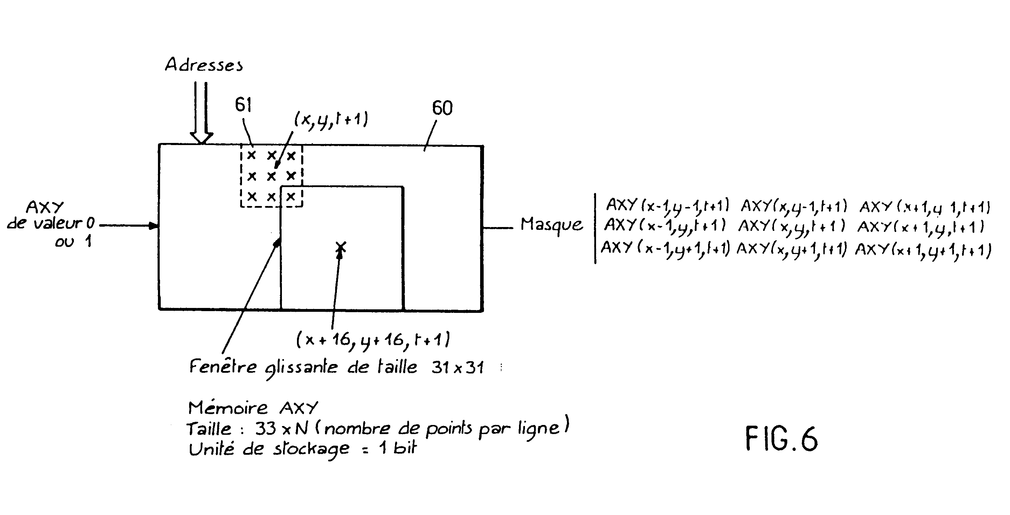

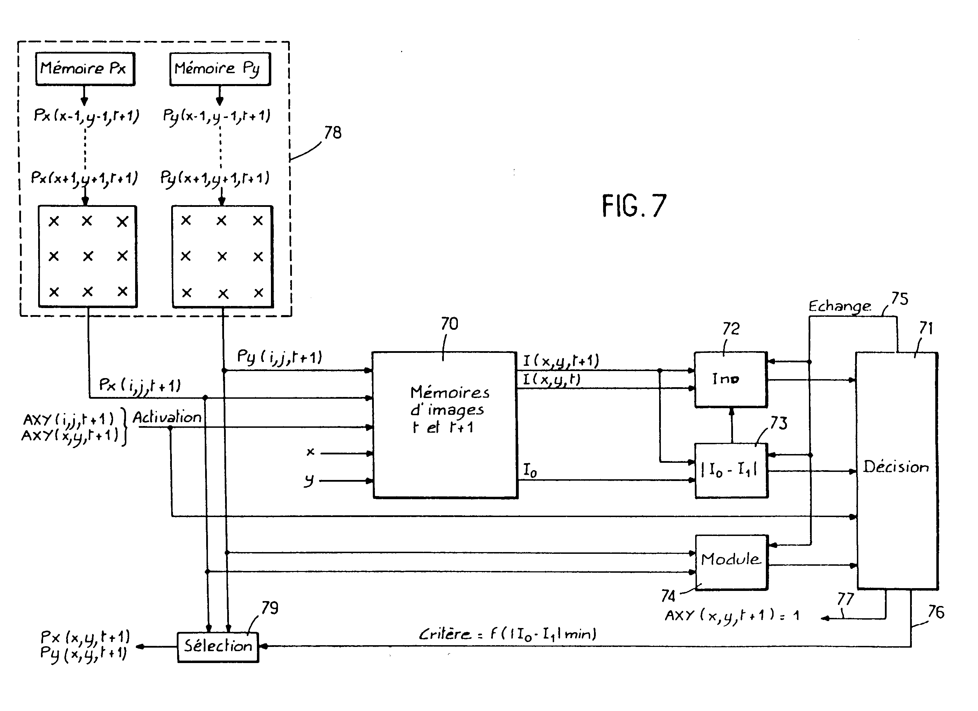

Un mode de réalisation détaillé de cette solution est présenté ci-après en référence aux figures 6 et 7.

En raison de la non-bijectivité de la projection effectuée point par point de l'image t vers l'image t + 1, et qui s'effectue parallèlement au vecteur-vitesse du point d'origine, des points d'image t + 1 n'ont pas de prédiction Px, Py (AXY = o).

A ces points (x, y, t + 1) correspond l'information :

AXY (x, y, t + 1) = 0

et, suite à la phase d'initialisation du système:

Px (x, y, t + 1) = 0

Py (x, y, t + 1) = 0

Supposons donc qu'au point (x, y, t + 1) l'on ait :

AXY (x, y, t + 1) = 0

Les opérations mises en oeuvre pour attribuer une prédiction à ce point (x, y, t + 1) consistent à :

1) repérer dans le voisinage 61 de ce point, les points ayant une prédiction validée (AXY = 1)

2) tester chaque prédiction validée au point (x, y, t + 1)

3) sélectionner 79 la prédiction donnant une DFD minimale.

Le voisinage 61 est centré sur le point (x, y, t) et limité à une taille 3 x 3 (fig. 6). La connaissance des valeurs

AXY (x - 1, y - 1, t + 1)

AXY (x, y - 1, t + 1)

AXY (x + 1, y - 1, t + 1)

AXY (x - 1, y, t + 1)

AXY (x + 1, y, t + 1)

AXY (x - 1, y + 1, t + 1)

AXY (x, y + 1, t + 1)

AXY (x + 1, y + 1, t + 1)

permet de lister les points ayant eu une prédiction précédemment validée (AXY = 1).

Soit l'un de ces points (i, j, t + 1) pour lequel Px (i, j, t + 1) et Py(i, j, t + 1) existent donc: on peut alors calculer :

- Io = I(x - Px(i, j, t + 1), y - Py(i, j, t + 1), t)

- I1 = I(x, y, t + 1)

- |Io - I1|

En appelant :

IND = |I(x, y, t + 1) - I(x, y, t)|

et : DR = 15√2 (module maximum d'un vecteur vitesse).

L'algorithme de la table I est activé :

L'intérêt du calcul du module DR permet de retenir la valeur minimale en cas d'égalité.

Un schéma synoptique de circuits mettant en oeuvre cet algorithme est représenté en figure 7.

Le point courant correspondant au traitement décrit en figure 5 a pour position spatiale (x + 16, y + 16) dans l'image t + 1. Pour avoir un environnement stable autour du point (x, y, t + 1), il faut en effet que cet environnement ne soit plus modifié et donc hors de portée du plus grand déplacement (+/-15). De ce fait, la mémoire AXY 60 a une taille 33 x N (nombre de points par ligne d'image).

Si AXY(x, y, t + 1) n'est pas nul, le système de la figure 7 n'est jamais activé.

Si AXY(x, y, t + 1) est nul, le système sera activé en un point (i, j, t + 1) de l'environnement, si AXY(i, j, t + 1) n'est pas nul.

En cas d'activation demandée, les mémoires d'image t et t + 1, 70 sont adressées respectivement en (x, y, t) et (x - Px(i, j, t + 1), y - Py(i, j, t + 1), t) pour la première, (x, y, t + 1) pour la seconde.

Ces accès fournissent les données à partir desquelles IND et |Io -I1| sont calculés.

Dans le circuit de décision 71, les valeurs IND et |Io - I1| provenant des circuits correspondants 72, 73 sont traités conformément à l'algorithme de la table I.

Eventuellement, le module 74

$$\sqrt{Px^2 (i, j, t + 1) + Py^2(i, j, t + 1)}$$

est appelé pour regler les conflits d'égalité.

TABLE I

* si |Io - I1| < IND

alors :

Px(x, y, t + 1) = Px(i, j, t + 1)

Py (x, y, t + 1) = Py(i, j, t + 1)

IND = |Io - I1|

$$DR = \sqrt{Px^2(x, y, t + 1) + Py^2(x, y, t + 1)}$$

AXY(x, y, t + 1) = 1


* si |Io - I1| = IND

$$** \text{ soit } DR > \sqrt{Px^2(i, j, t + 1) + Py^2(i, j, t + 1)}$$

alors :

Px(x, y, t + 1) = Px(i, j, t + 1)

Py(x, y, t + 1) = Py(i, j, t + 1)

$$DR = \sqrt{Px^2(i, j, t + 1) + Py^2(i, j, t + 1)}$$

AXY(x, y, t + 1) = 1

$$** \text{ soit } DR = \sqrt{Px^2(i,j,t + 1) + Py^2(i,j,t + 1)}$$

alors :

on calcule les moyennes de :

Px(x, y, t + 1) et Px(i, j, t + 1), et de :

Py (x, y, t + 1) et Py(i, j, t + 1)

que l'on mémorise en (x, y, t + 1)

et on valide le résultat par :

AXY(x, y, t + 1) = 1

$$** \text{ soit } DR < \sqrt{Px^2(i,j,t + 1) + Py^2(i,j,t + 1)}$$

alors aucun tableau n'est modifié.

* Si |I_o - I_1| > IND

alors aucun tableau n'est modifié.


De ce circuit de décision 71, sortent les signaux suivants :

* échange 75, qui modifie ou non IND en fonction de |I_o -I_1|, de même pour le module DR 74 ;
* critère 76, qui transfère ou non le vecteur Px(i, j, t + 1), Py(i, j, t + 1) vers les mémoires 78 Px et Py à l'adresse (x, y). Le vecteur validé par le circuit 79 de sélection correspond à un critère de |I_o -I_1| minimal ;
* l'adresse (x, y) de la mémoire AXY est mise à 1 dès qu'une prédiction est allouée au point (x, y, t + 1) (77).

Bien entendu, il faut prévoir la nécessaire gestion des adresses mémoires d'images t et t + 1, 70 des mémoires de prédiction Px et Py, de la mémoire AXY 60 (non représenté). En effet, ces différentes mémoires sont lues en des adresses différentes pour assurer le bon fonctionnement de la figure 7.

Pour le premier cas,     l'adresse est :

x + 16 + int(Vx)

y + 16 + int(Vy)

sans oublier les mémoires d'images t et t + 1 (voir figure 6).

Pour le second cas, la mémoire AXY 60 est adressée en (x, y), puis aux points environnants, en lecture puis en écriture. Les mémoires 78 Px et Py sont adressées en (x, y) et les mémoires d'images t et t + 1 70 respectivement en (x, y, t), (x - Px(i, j, t + 1), y - Py(i, j, t + 1), t) et (x, y, t + 1).

Le troisième et dernier cas de conflit recensé, à savoir le problème de la gestion des bords d'images, est résolu soit par l'utilisation d'un processus d'interpolation spatiale de l'image, soit encore par l'utilisation du système à multi-prédiction de l'invention.

Description du système à multi-prédictions

On rappelle que l'algorithme d'estimation de mouvement est représenté par la formule:

Estimation E = prédiction P + fonction de correction.

La fonction de correction est une expression connue, de la forme gain x DFD x gradient spatial.

La multi-prédiction consiste à utiliser en parallèle plusieurs prédictions de vecteurs mouvement, et à choisir ensuite, en fonction du résultat d'un test (recherche d'une erreur minimale dans la reconstruction d'image), la prédiction optimale, et donc l'estimation la meilleure.

En d'autres termes, plusieurs candidats sont utilisés pour la prédiction P, et leur pertinence relative est mesurée, après calcul de l'estimation E, de façon à sélectionner le meilleur.

Les prédictions candidates sont de trois types:

- des prédictions spatiales ;
- des prédictions temporelles ;
- une prédiction "spatio-temporelle", dans l'axe de mouvement.

Dans la pratique, deux schémas sont envisageables, représentés respectivement en table 2 et table 3.

En table 2, les n prédictions en parallèle font l'objet d'un traitement par la méthode de WALKER et RAO, afin d'aboutir à une estimation 1, 2, 3...,n, par application d'une fonction de correction.

A partir de chaque estimation, on va chercher pour chaque point courant d'image courante, le point source correspondant, et après compensation, on mesure la DFD (écart de luminance) entre le point calculé et le point réel de l'image source.

En quelque sorte, on compare, dans l'émetteur, le résultat tel qu'il sera obtenu au récepteur (image reconstruite), avec la réalité (image source non transmise, ou partiellement transmise).

Selon l'invention, la sélection de la meilleure estimation du vecteur vitesse au point (x, y, t) est effectuée par détermination de la DFD minimale.

Dans un autre mode de réalisation, correspondant à une multi-prédiction proprement dite (table 3), la DFD est immédiatement calculée pour chaque prédiction. Il est alors ensuite procédé à un choix de la meilleure prédiction par recherche de la DFD minimale. Le calcul de l'estimation du vecteur vitesse au point (x, y, t) est alors effectué à partir de cette seule prédiction, par application de la fonction de correction de WALKER et RAO.

Ce second schéma, en apparence plus simple puisqu'il ne calcule qu'une seule fonction de correction, s'est révélé en fait moins performant que le premier, pour les tests réalisés ; il comporte toutefois tout de même certains intérêts.

Dans la description qui va suivre, le terme multi-prédiction se rapporte en fait, en tout état de cause, au mode de réalisation de la table 2.

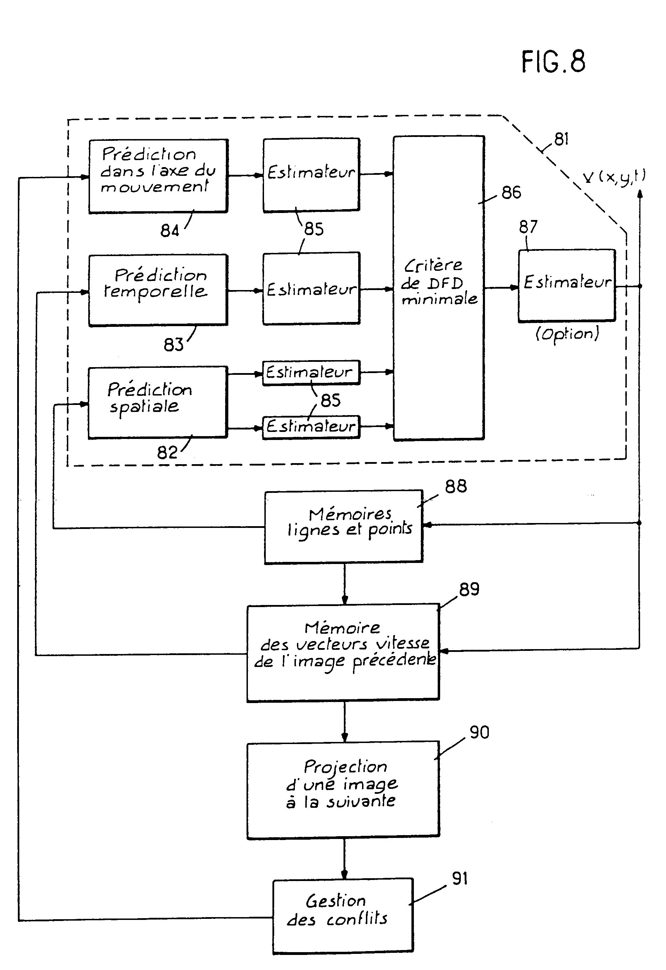

Le schéma synoptique de la figure 8 illustre le mode d'insertion de la logique de multi-prédiction 81 suivant l'invention dans un procédé de codage d'image.

Comme déjà commenté à propos du tableau 2, on effectue en parallèle une ou plusieurs prédiction(s) spatiale(s) 82, une ou plusieurs prédiction(s) temporelle(s) 83, et une prédiction dans l'axe du mouvement 84. Ces prédictions sont traitées par estimateurs 85, puis la prédiction la meilleure est sélectionnée en 86 sur le critère de DFD minimale.

L'estimateur à multi-prédiction 81 comporte également en option une étape supplémentaire d'estimation 87. Cette étape 87 consiste à effectuer une nouvelle itération de la méthode de WALKER et RAO, à partir de la DFD calculée en 86. Cette itération supplémentaire est avantageuse, dans le but d'affiner davantage l'estimation du vecteur vitesse. Elle est en outre relativement peu coûteuse en traitement, sachant que, dans l'équation d'estimation selon WALKER et RAO, c'est le calcul de la DFD qui demande le traitement le plus complexe. En conséquence, la DFD étant disponible à l'étape 86, le complément d'estimation 87 est une option avantageuse.

Le schéma de la figure 8 illustre également l'utilisation des mémoires tampons 88, 89 alimentant les étapes de prédiction 82, 83, 84.

La mémoire 88 stocke les points courants de l'image courante, et alimente le bloc de prédiction spatiale 82.

La mémoire 89 stocke les coordonnées des vecteurs vitesse de l'image précédente, et est connectée en sortie d'une part au bloc de prédiction temporelle 83, et d'autre part, au bloc de prédiction dans l'axe de mouvement 84 via les étapes 90, 91. Dans l'étape 90, on effectue la projection de l'image précédente à l'image courante des vecteurs vitesse, selon le procédé d'estimation dans l'axe du mouvement décrit plus haut. L'étape 91 correspond à l'étape de gestion des conflits, déjà discutée.

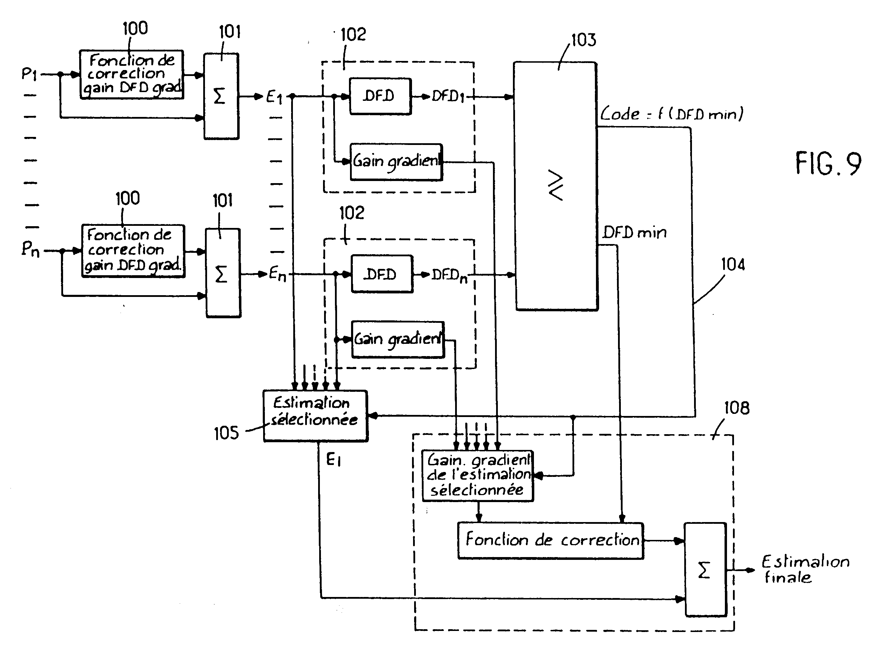

La figure 9 détaille une implantation possible pour les différents circuits constituant le système d'estimation de mouvement à multi-prédiction de l'invention.

Les prédictions candidates (x, y, t correspond au point de coordonnées spatiales x, y, et de composante temporelle t) sont les suivantes :

$P1 (x,y,t) = E (x-1, y-1, t)$

$P2 (x, y, t) = E (x, y-1, t)$

$P3 (x, y, t) = E (x + 1, y-1, t)$

$P4 (x, y, t) = E (x, y, t-1)$

$P5 (x, y, t) = PM (x-1, y, t)$

$P6 (x, y, t) = PM (x + 1, y, t)$

$P7 (x, y, t) = PM (x-1, y + 1, t)$

$P8 (x, y, t) = PM (x, y + 1, t)$

$P9 (x, y, t) = PM (x + 1, y + 1, t)$

$P10 (x, y, t) = PM (x, y, t)$

.....

On note :

$P_i (x, y, t)$, une prédiction candidate pour l'estimation $E_i$ du point (x, y, t)

E(k, l, m), l'estimation précédemment calculée au point (k, l, m)

PM(n, p, t), la prédiction dans le sens du mouvement allouée au point (n, p, t)

On peut augmenter le nombre de candidats pour tenter d'améliorer le résultat, mais les contraintes de réalisations matérielles imposent au contraire de diminuer ce nombre. Des résultats satisfaisants ont été obtenus avec les seules prédictions P2, P5, P6, P8 et P10.

Chaque prédiction $P_i$ détermine une fonction de correction et leur combinaison donne une estimation $E_i$.

Pour sélectionner la meilleure estimation du vecteur-déplacement au point (x, y, t), on calcule la DFD correspondant à chaque estimation potentielle.

Le critère de choix consiste à retenir l'estimation pour laquelle la DFD est minimale. En cas de conflit, le choix porte en priorité sur P10, ou P8, ou P6, ou P5.

Chacune des voies 1 à n comporte un circuit de calcul de la fonction de correction 100, dont une sortie est connectée à un circuit additionneur 101, recevant également en entrée la valeur de la prédiction $P_i$. Chaque circuit additionneur 101 fournit en sortie une valeur d'estimation $E_i$ en parallèle. Chaque estimation $E_i$ alimente un circuit 102 de calcul de la DFD, c'est-à-dire l'écart de luminance entre l'image reconstituée à partir de l'estimation $E_i$, et l'image réelle. Chaque circuit 102 calcule également le gain et le gradient de l'estimation, au sens de WALKER et RAO.

La logique de fonctionnement du système est alors la suivante :

- les DFD calculées dans les circuits 102 sont comparées dans le circuit 103 afin d'extraire l'indice de la prédiction $P_1...P_n$ fournissant la DFD minimale. Cet indice transite en 104 jusqu'à un circuit de sélection 105 alimenté en entrée par les valeurs des estimations $E_1,...E_n$, et fournissant en sortie l'estimation $E_s$ sélectionnée.

Cette estimation $E_s$ fait alors l'objet d'une nouvelle itération de la méthode de WALKER et RAO dans le circuit 108, à partir des valeurs de gain, de gradient et de DFD calculés dans les circuits 102. Le circuit 108 fournit enfin en sortie, l'estimation finale du vecteur vitesse.

Les essais réalisés ont montré que, à plus de 99 %, la prédiction dans le sens du mouvement donne la meilleure estimation pour le vecteur vitesse.

## TABLE 2

### ESTIMATION MULTIPREDICTIVE

prédiction 1          prédiction 2          prédiction n
    ↓                     ↓                     ↓
fonction de          fonction de          fonction de
correction           correction           correction
    ↓                     ↓                     ↓
estimation 1         estimation 2         estimation n
    ↓                     ↓                     ↓
DFD1                 DFD2                 DFDn
    ↓                     ↓                     ↓

critère de choix de la meilleure estimation = DFD min
                          ↓
          estimation du vecteur-vitesse
                 au point (x, y, t)

## TABLE 3

### MULTIPREDICTION PROPREMENT DITE

prédiction 1          prédiction 2          prédiction n
    ↓                     ↓                     ↓
DFD1                 DFD2                 DFDn
                          ↓
                      DFD min
                          ↓
                  fonction de
                  correction
                          ↓
          estimation du vecteur-mouvement
                 au point (x, y, t)

**Revendications**

1. Procédé d'estimation de mouvement pour séquences d'images électroniques, notamment destiné à affecter à chaque point d'image électronique un vecteur de déplacement dans le plan de l'image à l'instant t, dans le but par exemple d'une part, de réaliser un traitement de compression optimisée du signal d'image, et/ou d'autre part de permettre de réaliser une projection approximative de la position de chaque point de l'image t dans l'image suivante à l'instant (t + 1),

   ledit vecteur de déplacement courant d'un point courant (B, fig 4) à l'instant t étant calculé selon un processus algorithmique de prédiction/correction, ledit processus consistant à prendre comme hypothèse de départ de calcul une valeur prédite de mouvement

$$(\overrightarrow{P_{t+1}}),$$

ladite valeur prédite étant corrigée ensuite au sein du processus selon un procédé de correction par optimisation de critère,
caractérisé en ce que
ladite valeur prédite de mouvement

$$(\overrightarrow{P_{t+1}})$$

du point courant (B) est la valeur du vecteur

$$(\overrightarrow{V_t})$$

de déplacement d'origine associé à un point d'origine (A) de l'image de l'instant (t - 1), ledit point courant (B) étant la projection approximative dudit point d'origine (A) selon ledit vecteur de déplacement d'origine

$$(\overrightarrow{V_t}).$$

2. Procédé suivant la revendication 1, caractérisé en ce que ledit processus algorithmique de prédiction/correction est un processus du type "récursif par points", et de préférence, le processus de WALKER et RAO ou le processus de ROBERT CAFFORIO et ROCCA.

3. Procédé suivant la revendication 1, caractérisé en ce que ladite projection approximative du point d'origine consiste à choisir comme point courant projeté un des pixels les plus proches.

4. Procédé suivant la revendication 1, caractérisé en ce que tous les points d'origine de l'image (t - 1) ont un vecteur de déplacement estimé, en ce qu'on projette chacun desdits points d'origine en leurs points cibles courants de l'image t, et en ce qu'on calcule le vecteur de déplacement estimé de chacun desdits points cibles courants selon ledit processus de prédiction/correction.

5. Procédé d'estimation de mouvement pour séquences d'images électroniques suivant la revendication 1, notamment destiné à affecter à chaque point d'image électronique un vecteur de déplacement dans le plan de l'image à l'instant t, dans le but par exemple d'une part, de réaliser un traitement de compression optimisée du signal d'image, et/ou d'autre part de permettre de réaliser une projection approximative de la position de chaque point d'image à l'instant (t + 1), ledit vecteur de déplacement courant d'un point courant à l'instant t étant calculé selon un processus algorithmique de prédiction/correction, ledit processus consistant à prendre comme hypothèse de départ de calcul une valeur prédite de mouvement, ladite valeur prédite étant corrigée ensuite au sein du processus selon un procédé de correction par optimisation de critère,
caractérisé en ce que,
ledit procédé réalise en parallèle au moins deux calculs d'estimation de mouvement à partir de deux valeurs prédites de mouvement du point courant, lesdites valeurs prédites comprennant au moins une prédiction spatio-temporelle dans l'axe du mouvement et au moins une des valeurs suivantes :
- au moins une prédiction spatiale de mouvements ;
- au moins une prédiction temporelle de mouvements;
et en ce que
ledit procédé choisit l'estimation du vecteur de vitesse selon un procédé de décision par optimisation de critère.

**6.** Procédé d'estimation de mouvement pour séquences d'images électroniques suivant la revendication 1, notamment destiné à affecter à chaque point d'image électronique un vecteur de déplacement dans le plan de l'image à l'instant t, dans le but par exemple d'une part, de réaliser un traitement de compression optimisée du signal d'image, et/ou d'autre part de permettre de réaliser une projection approximative de la position de chaque point d'image à l'instant (t + 1), ledit vecteur de déplacement courant d'un point courant à l'instant t étant calculé selon un processus algorithmique de prédiction/correction, ledit processus consistant à prendre comme hypothèse de départ de calcul une valeur prédite de mouvement, ladite valeur prédite étant corrigée ensuite au sein du processus selon un procédé de correction par optimisation de critère,

caractérisé en ce que

ledit procédé prend en considération au moins deux valeurs prédites distinctes de mouvement pour chaque point courant, lesdites valeurs prédites comprennant au moins une prédiction spatio-temporelle dans l'axe du mouvement et au moins une des valeurs suivantes :

- au moins une prédiction spatiale de mouvements ;
- au moins une prédiction temporelle de mouvements;

et en ce que

le procédé choisit une valeur prédite de mouvement selon un processus de décision par optimisation de critère, et calcule le vecteur de déplacement estimé du point courant selon ledit processus algorithmique de prédiction/correction.

**7.** Procédé d'estimation de mouvement selon l'une quelconque des revendications 1, 5 ou 6, caractérisé en ce qu'on affecte à chacun des points d'image courant dépourvu d'un vecteur mouvement estimé, le vecteur mouvement de celui des points proches audit point courant qui permet d'obtenir la reconstitution la plus fidèle par rapport au point courant réel.

**8.** Procédé suivant l'une quelconque des revendications 1, 5 et 6 caractérisé en ce que ledit critère d'optimisation est l'écart de luminance DFD de WALKER et RAO.

**9.** Procédé suivant l'une quelconque des revendications 5 ou 6, caractérisé en ce qu'au moins une des valeurs prédites de vecteurs mouvement, pour le point courant, est une prédiction dans le sens du mouvement d'un point appartenant au groupe de huit points entourant ledit point courant dans l'image courante.

**10.** Procédé suivant la revendication 5, caractérisé en ce que lesdites valeurs prédites fournies en parallèle comprennent au moins les valeurs suivantes :

- $P2 (x,y,t) = E (x, y - 1, t),$
- $P5 (x,y,t) = PM (x - 1, y,t),$
- $P6 (x,y,t) = PM (x + 1, y,t),$
- $P8 (x,y,t) = PM (x, y + 1, t),$
- $P10 (x,y,t) = PM (x,y,t),$

avec :

$E(k,l,m)$ : estimation précédemment calculé au point $(k,l,m)$ ;

$PM (n,p,t)$ : prédiction dans le sens du mouvement allouée au point $(n,p,t)$.

**11.** Procédé de codage de séquences d'images électroniques comprenant inn processus de codage par estimation de mouvement selon l'une quelconque des revendications 1 à 10,

caractérisé en ce que

ledit procédé de codage inclut également des moyens de mise en oeuvre d'un processus parallèle de codage par filtre linéaire d'échantillonnage,

et en ce que

ledit procédé de codage comporte des moyens de comparaison et de sélection du meilleur processus de codage permettant une reconstitution d'image la plus fidèle.

**12.** Procédé de codage de séquences d'images électroniques comprenant inn processus de codage par estimation de mouvement selon l'une quelconque des revendications 1 à 10,

caractérisé en ce que

ledit procédé de codage inclut également des moyens de mise en oeuvre d'un processus parallèle de codage par filtre linéaire d'échantillonnage,

EP 0 321 356 B1

et en ce que

les moyens de mise en oeuvre du processus de codage par estimation de mouvement détermine s'il y a lieu ou non d'utiliser plutôt un codage par filtre linéaire d'échantillonnage, notamment en cas de zone fixe ou de zone à mobilité rapide.

## Claims

1. Process for estimating the movement for sequences of electronic images, particularly intended to allocate to each electronic image point a displacement vector in the plane of the image at instant t, in order for example on the one hand to carry out an optimized compression treatment of the image signal and/or on the other to make it possible to carry out an approximate projection of the position of each point of the image t in the following image at the instant (t + 1), said current displacement vector of a current point (B, fig. 4) at the instant t being calculated in accordance with a prediction/correction algorithmic process, consisting of taking as the starting calculation hypothesis a predicted movement value

$$(\overrightarrow{P_{t+1}}) \, ,$$

said predicted value then being corrected within the process in accordance with a correction process by criterion optimization, characterized in that said predicted movement value

$$(\overrightarrow{P_{t+1}})$$

of the current point (B) is the value of the origin displacement vector

$$(\overrightarrow{V_t})$$

associated with an origin point (A) of the image of the instant (t - 1), said current point (B) being the approximate projection of said origin point (A) in accordance with the origin displacement vector

$$(\overrightarrow{V_t}) \, .$$

2. Process according to claim 1, characterized in that said algorithmic prediction/correction process is of the "pixel recursive" type and preferably is the Walker and Rao or the Robert Cafforio and Rocca process.

3. Process according to claim 1, characterized in that said approximate projection of the origin point consists of choosing as the projected current point one of the closest pixels.

4. Process according to claim 1, characterized in that all the origin points of the image (t - 1) have an estimated displacement vector, in that each of the said origin points is projected at their current target points of the image t and in that the estimated displacement vector of each of said current points is calculated in accordance with said prediction/correction process.

5. Process for estimating movement for electronic image sequences according to claim 1, particularly intended to allocate to each electronic image point a displacement vector in the plane of the image at the instant t, with the aim for example of on the one hand bringing about an optimized compression treatment of the image signal and/or on the other making it possible to carry out an approximate projection of the position of each image point at the instant (t + 1), said current displacement vector of a current point at the instant t being calculated in accordance with an algorithmic prediction/correction process, which consists of taking as the starting calculation hypothesis a predicted movement value, which is then corrected within the process in accordance with a correction process by criterion

17

optimization, characterized in that said process carries out in parallel at least two movement estimation calculations on the basis of two predicted movement values of the current point, said predicted values comprising at least one space-time prediction in the axis of the movement and at least one of the following values:

- at least one space prediction of movements,
- at least one time prediction of movements,

and in that said process chooses the estimate of the velocity vector in accordance with a decision process by criterion optimization.

6. Process for estimating movement for electronic image sequences according to claim 1, particularly intended to allocate to each electronic image point a displacement vector in the plane of the image at the instant t, with the aim for example of on the one hand bringing about an optimized compression treatment of the image signal and/or on the other making it possible to carry out an approximate projection of the position of each image point at the instant (t + 1), said current displacement vector of a current point at the instant t being calculated in accordance with an algorithmic prediction/correction process, which consists of taking as the starting calculation hypothesis a predicted movement value, which is then corrected within the process in accordance with a correction process by criterion optimization, characterized in that said process takes into consideration at least two separate predicted movement values for each current point, said predicted values comprising at least one space-time prediction in the axis of the movement and at least one of the following values:

- at least one space prediction of movements,
- at least one time prediction of movements,

and in that the process chooses a predicted movement value in accordance with a decision process by criterion optimization and calculates the estimated displacement vector of the current point in accordance with said algorithmic prediction/correction process.

7. Process for estimating movement according to any one of the claims 1, 5 or 6, characterized in that to each of the current image points not having an estimated movement vector is allocated the movement vector of that of the points close to said current point which makes it possible to obtain the most faithful reconstitution compared with the real current point.

8. Process according to any one of the claims 1, 5 and 6, characterized in that said optimization criterion is the DFD luminance variation of Walker and Rao.

9. Process according to either of the claims 5 and 6, characterized in that at least one of the predicted movement vector values for the current point is a prediction in the sense of the movement of a point belonging to the group of eight points surrounding said current point in the current image.

10. Process according to claim 5, characterized in that said predicted values supplied in parallel comprise at least one of the following values:

- $P2 (x,y,t) = E (x, y - 1, t)$,
- $PS (x,y,t) = PM (x - 1, y,t)$,
- $P6 (x,y,t) = PM (x + 1, y,t)$,
- $PS (x,y,t) = PM (x, y + l, t)$,
- $PIO (x,y,t) = PM (x,y,t)$,

with:

$E(k,l,m)$ : previously calculated estimate at the point $(k,l,m)$,

$PM (n,p,t)$ : prediction in the sense of the movement allocated to the point $(n,p,t)$.

11. Process for coding sequences of electronic images comprising a movement estimation coding process according to any one of the claims 1 to 10, characterized in that said coding process also includes means for performing a parallel' coding process by linear sampling filter and in that said coding process has means for the comparison and selection of the best coding process permitting the most faithful image reconstitution.

12. Process for coding sequences of electronic images comprising a movement estimation coding process according to any one of the claims l to 10, characterized in that said coding process also includes means for carrying out a parallel coding process by linear sampling filter and in that the means for performing the movement estimation coding process determine whether or not preference should be given to coding by linear sampling filter, particularly in the case of a fixed zone or rapid mobility zone.

**Patentansprüche**

1. Verfahren zur Bewegungsabschätzung für Sequenzen elektronischer Bilder, das insbesondere dazu bestimmt ist, jedem elektronischen Bildpunkt einen Bewegungsvektor in der Bildebene zum Zeitpunkt t zuzuteilen, mit dem Ziel, beispielsweise einerseits eine Verarbeitung optimierter Kompression des Bildsignals durchzuführen und/oder andererseits eine Näherungsprojektion der Position jedes Bildpunktes t im nachfolgenden Bild zum Zeitpunkt (t + 1) zu ermöglichen, wobei der laufende Bewegungsvektor eines aktuellen Punktes (B, Fig. 4) zum Zeitpunkt t gemäß einem algorithmischen Prozeß der Prädiktion/Korrektur berechnet wird, der darin besteht, als Ausgangshypothese der Berechnung einen vorhergesagten Bewegungswert

$$(\overrightarrow{P_{t+1}})$$

zu nehmen, der anschließend mittels des Prozesses gemäß einem Korrekturverfahren durch Kriterienoptimierung korrigiert wird,
dadurch gekennzeichnet, daß
der vorhergesagte Bewegungswert

$$(\overrightarrow{P_{t+1}})$$

des aktuellen Punktes (B) der Wert des ursprünglichen Bewegungsvektors

$$(\overrightarrow{V_t})$$

ist, der einem Ursprungs-Bildpunkt (A) zum Zeitpunkt (t - 1) zugeordnet ist, wobei der aktuelle Punkt (B) die Näherungsprojektion des Ursprungspunktes (A) gemäß dem ursprünglichen Bewegungsvektor

$$(\overrightarrow{V_t})$$

ist.

2. Verfahren gemäß Anspruch 1, dadurch gekennzeichnet, daß der algorithmische Prozeß der Prädiktion/Korrektur ein Prozeß vom Typ "rekursiv durch Punkte" und vorzugsweise der Prozeß von WALKER und RAO oder der Prozeß von ROBERT CAFFORIO und ROCA ist.

3. Verfahren nach Anspruch 1, dadurch gekennzeichnet, daß die Näherungsprojektion des Ursprungspunktes darin besteht, als projizierten aktuellen Punkt eines der nächsten Pixel zu wählen.

4. Verfahren nach Anspruch 1, dadurch gekennzeichnet, daß alle Ursprungspunkte des Bildes (t - 1) einen geschätzten Bewegungsvektor aufweisen, daß man jeden der Ursprungspunkte auf deren aktuelle Zielpunkte des Bildes t projiziert, und daß man den geschätzten Bewegungsvektor jedes der aktuellen Zielpunkte gemäß dem Prädiktion/Korrektur-Prozeß berechnet.

5. Verfahren gemäß Anspruch 1 zur Bewegungsabschätzung für Sequenzen elektronischer Bilder, das insbesondere dazu bestimmt ist, jedem elektronischen Bildpunkt einen Bewegungsvektor in der Bildebene zum Zeitpunkt t zuzuteilen, mit dem Ziel, beispielsweise einerseits eine Verarbeitung optimierter Kompression des Bildsignals durchzuführen und/oder andererseits eine Näherungsprojektion der Position jedes Bildpunktes zum Zeitpunkt (t + 1) zu ermöglichen,
wobei der laufende Bewegungsvektor eines aktuellen Punktes zum Zeitpunkt t gemäß einem algorithmischen Prozeß der Prädiktion/Korrektur berechnet wird, der darin besteht, als Ausgangshypothese der Berechnung einen vorhergesagten Bewegungswert zu nehmen, der anschließend mittels des Prozesses gemäß einem Korrekturverfahren durch Kriterienoptimierung korrigiert wird,

dadurch gekennzeichnet, daß das Verfahren parallel wenigstens zwei Bewegungsabschätzungsberechnungen durchführt, ausgehend von zwei vorhergesagten Bewegungswerten des aktuellen Punktes, wobei die vorhergesagten Werte wenigstens eine räumlich-zeitliche Vorhersage auf der Bewegungsachse und wenigstens einen der folgenden Werte umfassen:

wenigstens eine räumliche Vorhersage von Bewegungen;

und wenigstens eine zeitliche Vorhersage von Bewegungen;

und daß das Verfahren die Abschätzung des Geschwindigkeitsvektors gemäß einem Entscheidungsverfahren durch Kriterienoptimierung wählt.

6. Verfahren gemäß Anspruch 1 zur Bewegungsabschätzung für Sequenzen elektronischer Bilder, das insbesondere dazu bestimmt ist, jedem elektronischen Bildpunkt einen Bewegungsvektor in der Bildebene zum Zeitpunkt t zuzuteilen, mit dem Ziel, beispielsweise einerseits eine Verarbeitung optimierter Kompression des Bildsignals durchzuführen und/oder andererseits eine Näherungsprojektion der Position jedes Bildpunktes zum Zeitpunkt (t + 1) zu ermöglichen,

wobei der laufende Bewegungsvektor eines aktuellen Punktes zum Zeitpunkt t gemäß einem algorithmischen Prozeß der Prädiktion/Korrektur berechnet wird, der darin besteht, als Ausgangshypothese der Berechnung einen vorhergesagten Bewegungswert zu nehmen, der anschließend mittels des Prozesses gemäß einem Korrekturverfahren durch Kriterienoptimierung korrigiert wird,

dadurch gekennzeichnet, daß

das Verfahren wenigstens zwei unterschiedliche vorhergesagte Bewegungswerte für jeden aktuellen Punkt in Betracht zieht, wobei die vorhergesagten Werte wenigstens eine räumlich-zeitliche Vorhersage auf der Bewegungsachse und wenigstens einen der folgenden Werte umfassen:

wenigstens eine räumliche Vorhersage von Bewegungen;

und wenigstens eine zeitliche Vorhersage von Bewegungen;

und daß das Verfahren einen vorhergesagten Bewegungswert gemäß einem Entscheidungsprozeß durch Kriterienoptimierung wählt und den geschätzten Bewegungsvektor des aktuellen Punktes gemäß dem algorithmischen Prozeß der Prädiktion/Korrektur berechnet.

7. Verfahren zur Bewegungsabschätzung gemäß einem der Ansprüche 1, 5 oder 6, dadurch gekennzeichnet, daß jedem der aktuellen Bildpunkte, die nicht mit einem abgeschätzten Bewegungsvektor versehen sind, der Bewegungsvektor von den Punkten zugeteilt wird, die dem aktuellen Punkt nahe sind, wodurch die getreueste Wiederherstellung bezüglich des reellen aktuellen Punktes erhalten werden kann.

8. Verfahren nach einem der Ansprüche 1, 5 und 6, dadurch gekennzeichnet, daß das Optimierungskriterium die Leuchtdichten-Abweichung DFD von WALKER und RAO ist.

9. Verfahren nach einem der Ansprüche 5 oder 6, dadurch gekennzeichnet, daß wenigstens einer der vorhergesagten Werte der Bewegungsvektoren für den aktuellen Punkt eine Vorhersage in Bewegungsrichtung eines Punktes ist, der zur Gruppe von acht Punkten gehört, die den aktuellen Punkt in dem aktuellen Bild umgeben.

10. Verfahren nach Anspruch 5, dadurch gekennzeichnet, daß die vorhergesagten, parallel gelieferten Werte wenigstens die folgende Werte umfassen:

- P2 $(x,y,t)$ = E $(x, y - 1, t)$,
- P5 $(x,y,t)$ = PM $(x - 1, y,t)$,
- P6 $(x,y,t)$ = PM $(x + 1, y,t)$,
- P8 $(x,y,t)$ = PM $(x, y + 1, t)$,
- P10 $(x,y,t)$ = PM $(x,y,t)$,

mit:

E$(k,l,m)$: vorher berechnete Abschätzung im Punkt $(k,l,m)$;

PM $(n,p,t)$: zugeteilte Vorhersage in Bewegungsrichtung im Punkt $(n,p,t)$.

11. Kodierungsverfahren von Sequenzen elektronischer Bilder, das einen Kodierungsprozeß durch Bewegungsabschätzung gemäß einem der Ansprüche 1 bis 10 umfaßt,

dadurch gekennzeichnet, daß

das Kodierungsverfahren auch Mittel zum Einsatz eines parallelen Kodierungsprozesses durch lineares Abtastfilter einschließt,

und daß das Kodierungsverfahren Vergleichs- und Auswahlmittel des besten Kodierungsprozesses, der die getreueste Bildwiederherstellung ermöglicht, umfaßt.

12. Kodierungsverfahren von Sequenzen elektronischer Bilder, das einen Kodierungsprozeß durch Bewegungsabschätzung gemäß einem der Ansprüche 1 bis 10 umfaßt,

dadurch gekennzeichnet, daß

das Kodierungsverfahren auch Mittel zum Einsatz eines parallelen Kodierungsprozesses durch lineares Abtastfilter einschließt,

und daß die Mittel zum Einsatz des Kodierungsprozesses durch Bewegungsabschätzung festlegen, ob eher eine Kodierung durch lineares Abtastfilter, insbesondere im Falle einer festen Zone oder Zone mit schneller Mobilität, angewandt werden soll oder nicht.

FIG.1

FIG.2

$(x+1,y-1)$

$(x,y-1)$

$(x-1,y-1)$

$(x,y)$

$t-1$      $t$

FIG.3

$(x,y)$      $(x,y)$

$t-1$      $t$

$\vec{P}_{t+1} \begin{cases} Px = Vx \\ Py = Vy \end{cases}$

$\vec{V}_{t+1}$

$\vec{V}_t \begin{cases} Vx \\ Vy \end{cases}$

$B$
$(x + int(Vx), y + int(Vy))$

$A(x,y)$      $(x,y)$

FIG.4

$t$      $t+1$

23

FIG.5A

# FIG.5B

54

Mémoire Px (x,y,t+1)
Taille image
Unité de stockage 8 bits

$P_x(x+int(V_x), y+int(V_y), t+1)$

$P_x(x+int(V_x), y+int(V_y), t+1)$

59

Transfert
ou
moyenne

$V_x(x,y,t)$

Transfert / Moyenne      52

55

Mémoire Py (x,y,t+1)
Taille image
Unité de stockage 8 bits

$P_y(x+int(V_x), y+int(V_y), t+1)$

$P_y(x+int(V_x), y+int(V_y), t+1)$

59

Transfert
ou
moyenne

$V_y(x,y,t)$

Adresses

61

(x,y,t+1)

60

AXY
de valeur 0
ou 1

Masque

Fenêtre glissante de taille 31 x 31

(x+16, y+16, t+1)

Mémoire AXY
Taille : 33 x N (nombre de points par ligne)
Unité de stockage = 1 bit

$$AXY(x-1,y-1,t+1) \quad AXY(x,y-1,t+1) \quad AXY(x+1,y-1,t+1)$$
$$AXY(x-1,y,t+1) \quad AXY(x,y,t+1) \quad AXY(x+1,y,t+1)$$
$$AXY(x-1,y+1,t+1) \quad AXY(x,y+1,t+1) \quad AXY(x+1,y+1,t+1)$$

FIG.6

EP 0 321 356 B1

FIG. 7

Mémoire Px   Mémoire Py

$Px(x-1,y-1,t+1)$   $Py(x-1,y-1,t+1)$

78

$Px(x+1,y+1,t+1)$   $Py(x+1,y+1,t+1)$

70   72   75   71

Echange

$Py(i,j,t+1)$

$Px(i,j,t+1)$   $I(x,y,t+1)$   Ino

$I(x,y,t)$

$AXY(i,j,t+1)$
$AXY(x,y,t+1)$   Activation

Mémoires
d'images
t et t+1

x   73

y   $I_0$   $|I_0 - I_1|$   Décision

Module

74   77   76

$AXY(x,y,t+1) = 1$

79

$Px(x,y,t+1)$   Sélection   $Critère = f(|I_0 \cdot I_1| min)$
$Py(x,y,t+1)$

EP 0 321 356 B1

FIG.8

Prédiction dans l'axe du mouvement — 84

Estimateur — 85

Prédiction temporelle — 83

Estimateur

Prédiction spatiale — 82

Estimateur — 85

Estimateur

Critère de DFD minimale — 86

Estimateur (Option) — 87

81

V(x,y,t)

Mémoires lignes et points — 88

Mémoire des vecteurs vitesse de l'image précédente — 89

Projection d'une image à la suivante — 90

Gestion des conflits — 91

FIG. 9

EP 0 321 356 B1